# EUROPÄISCHE PATENTSCHRIFT

(11) **EP 1 972 766 B1**
(45) Veröffentlichungstag und Bekanntmachung des Hinweises auf die Patenterteilung: **03.03.2010**
(21) Anmeldenummer: 08003986.0
(22) Anmeldetag: 04.03.2008
(51) Int. Cl.: F02D 9/10

(54) **Verfahren zur Herstellung einer Klappenvorrichtung sowie derartige Klappenvorrichtung**
Method for manufacturing a valve device and such a valve device
Procédé de fabrication d'un dispositif à clapets et un tel dispositif à clapets

(30) Priorität: 22.03.2007 DE 102007013782
(43) Veröffentlichungstag der Anmeldung: 24.09.2008
(73) Patentinhaber: Pierburg GmbH, 41460 Neuss (DE)
(72) Erfinder: Simons, Norbert, 40233 Düsseldorf (DE)
(74) Vertreter: Ter Smitten, Hans

(56) Entgegenhaltungen:
- DE-A1-102004 041 880
- DE-B3-102004 045 730

## Beschreibung

Die Erfindung betrifft ein Verfahren zur Herstellung einer Klappenvorrichtung für eine Verbrennungskraftmaschine für eine Verbrennungskraftmaschine mit folgenden Schritten:
a) Stanzen einer Klappe (1) aus einem Blech mit an entgegengesetzten Seiten eines Klappenkörpers (2) angeordneten Fortsätzen (3, 4);
b) Biegen der Fortsätze (3, 4) um mindestens 70° und maximal 100° zum Klappenkörper (2);
c) Verbinden der Fortsätze (3, 4) mit einer Welle (18), vorzugsweise mittels Schweißen,
sowie eine derartige Klappenvorrichtung für eine Verbrennungskraftmaschine mit einem Klappenkörper aus Blech.

Derartige Klappenvorrichtungen mit Klappenkörpern aus Blech können in Verbrennungskraftmaschinen beispielsweise als Drosselklappen oder aber als Drall- oder Tumbleklappen in Saugrohren sowie als Abgasklappen oder auch Bypassklappen im Abgasstrang einer Verbrennungskraftmaschine verwendet werden.

Klappenkörper aus Blech herzustellen ist ein bekanntes Verfahren, bei dem üblicherweise der Klappenkörper aus einer Blechplatte ausgestanzt wird, wodurch der Prozess im Vergleich zu anderen bekannten Verfahren deutlich vereinfacht wird. Eine derartig hergestellte Drosselklappe wird beispielsweise in der DE 101 50 516 A1 offenbart.

Diese Drosselklappenanordnung wird durch ein Verfahren hergestellt, bei dem in einem ersten Schritt eine Kontur des Drosselklappenkörpers mit Ausnahme kleiner Befestigungsflächen gestanzt wird und in einem zweiten Schritt abgerundete Randstücke am Umfang des Klappenkörpers durch Prägen erzeugt werden, woraufhin in einem letzten Schritt der Drosselklappenkörper durch Ausstanzen der Befestigungsflächen fertig gestellt wird. Dieser Klappenkörper weist zusätzlich ebenfalls zwei durch beispielsweise Stanzen hergestellte Durchgangslöcher an seiner Mittelachse auf, über welche der Klappenkörper mittels Schrauben an einer Welle befestigt wird.

Derartig aufgebaute Drosselklappenanordnungen benötigen jedoch eine Sicherung gegen axiales Verschieben der Drosselklappe mit der Welle im umgebenden Klappengehäuse, was üblicherweise dadurch erreicht wird, dass die Klappe gegen eine Buchse axial gesichert wird. Hierzu ist es notwendig, die Welle entsprechend zu bearbeiten. Würde man eine derartige Axialsicherung nicht vornehmen, könnte ein Schleifen des Klappenkörpers am umgebenden Gehäuse folgen, da die Lage des Klappenkörpers mit der Welle im Kanal nicht vollständig festgelegt ist.

Zusätzlich ist aus der DE 10 2004 041 880 A1 ein Verfahren zur Herstellung eines Klappenkörpers aus Blech sowie ein derartig hergestellter Klappenkörper bekannt, bei dem zunächst durch einen Stanz- Biegevorgang ein Klappenkörper aus einem Blech mit an entgegengesetzten Seiten des Klappenkörpers angeordneten um etwa 90° zum Klappenkörper gebogenen Fortsätzen hergestellt wird und anschließend die Fortsätze mit einer Welle durch Schweißen verbunden werden.

Aufgabe der Erfindung ist es somit ein Verfahren zur Herstellung einer Klappenvorrichtung sowie eine entsprechende Klappenvorrichtung zu schaffen, bei der eine Axialsicherung ohne zusätzliche Bauteile und ohne aufwendige Bearbeitung der Welle im Herstellprozess sichergestellt wird, wobei gleichzeitig die Montage vereinfacht werden soll und die Klappe möglichst kostengünstig herstellbar sein soll. Eine Reibung zwischen den Fortsätzen der Klappe soll verhindert werden und eine einfache Lagefixierung der Klappe am Gehäuse vor dem Befestigen der Welle erreicht werden.

Diese Aufgabe wird durch den kennzeichnenden Teil des Hauptanspruchs 1 gelöst.

Ein derartiges Verfahren ist kostengünstig durchzuführen, da auf eine Bearbeitung der Welle verzichtet werden kann und dennoch eine Axialsicherung bereitgestellt wird, ohne aufwendige zusätzliche Montageschritte durchführen zu müssen. So wird durch ein einfaches Verfahren eine gut gleitende Fläche geschaffen.

Die Aufgabe wird auch durch eine Klappenvorrichtung gemäß Anspruch 5 gelöst. Eine derartige Klappenvorrichtung ist in wenigen kostengünstigen Herstellschritten zu verwirklichen, wobei die umgebogenen Fortsätze als Axialsicherung des Klappenkörpers im Gehäuse dienen. Die Axialsicherung wird somit durch den einfachen Biegeprozess der ausgestanzten Fortsätze sichergestellt, wobei bei einem Biegen in einem Winkel von unter 90° zusätzlich eine gewisse Vorspannung der Fortsätze gegen die Welle erreicht wird. Zusätzlich wird die Anzahl der notwendigen Teile reduziert, da Schrauben zur Befestigung des Klappenkörpers nicht mehr notwendig sind und die aufwendige Bearbeitung der Welle zur axialen Sicherung gegen eine Buchse nicht mehr notwendig ist. Die Buchsen sind dabei in Bohrungen im kanalbildenden Gehäuse angeordnet, welche als Lagerstellen für die Klappe dienen. Durch diese Maßnahme wird somit die Reibung zum Gehäuse reduziert, so dass an den Gehäusewänden keine Schleifspuren entstehen und somit kein Material am Gehäuse abgetragen wird.

In einer weiterführenden Ausführungsform besteht die Welle auf zwei Wellenstümpfen, von denen jeder mit einem der beiden Fortsätze verbunden wird. Durch diese Maßnahme kann zusätzlich bei geöffneter Klappenstellung im Kanal der Strömungswiderstand deutlich verringert werden.

In einer hierzu alternativen Ausführungsform wird beim Stanzen gemäß Schritt a) in die Fortsätze jeweils ein Loch eingestanzt, wobei vor Schritt c) eine Welle von einer Seite der Klappenkörpers durch beide Löcher in den Fortsätzen geschoben wird. Somit wird sichergestellt, dass auch bei Verwendung einer durchgängigen Welle keine zusätzlichen Fertigungsschritte zur Befestigung der Welle am Klappenkörper notwendig sind.

Vorzugsweise wird der Klappenkörper mit den Fortsätzen vor Schritt c) in ein Klappengehäuse eingelegt, in dem ein Kanal ausgebildet ist, so dass direkt im Gehäuse die Welle durch Schweißen am Klappenkörper befestigt werden kann. Somit kann auch ein einstückiges Gehäuse verwendet werden.

Es wird deutlich, dass eine derartige Klappenvorrichtung sehr kostengünstig herstellbar ist und insbesondere durch die Integration der Axialsicherung in das Klappendesign einen einfachen kostengünstigen Aufbau erhält. Zusätzlich werden Reibungsstellen zum Gehäuse deutlich vermindert.

Ein Ausführungsbeispiel einer erfindungsgemäßen Klappenvorrichtung sowie der Herstellungsschritte einer derartigen Klappenvorrichtung ist in den Figuren dargestellt und wird nachfolgend beschrieben.

Figur 1 zeigt eine Draufsicht auf einen ersten Teil einer erfindungsgemäßen Klappenvorrichtung nach einem ersten Herstellungsschritt.

Figur 2 zeigt den Teil der erfindungsgemäßen Klappenvorrichtung aus Figur 1 nach einem zweiten Herstellungsschritt in Draufsicht.

Figur 3 zeigt den Teil der erfindungsgemäßen Klappenvorrichtung der Figuren 1 und 2 in einem Gehäuse nach Fertigstellung.

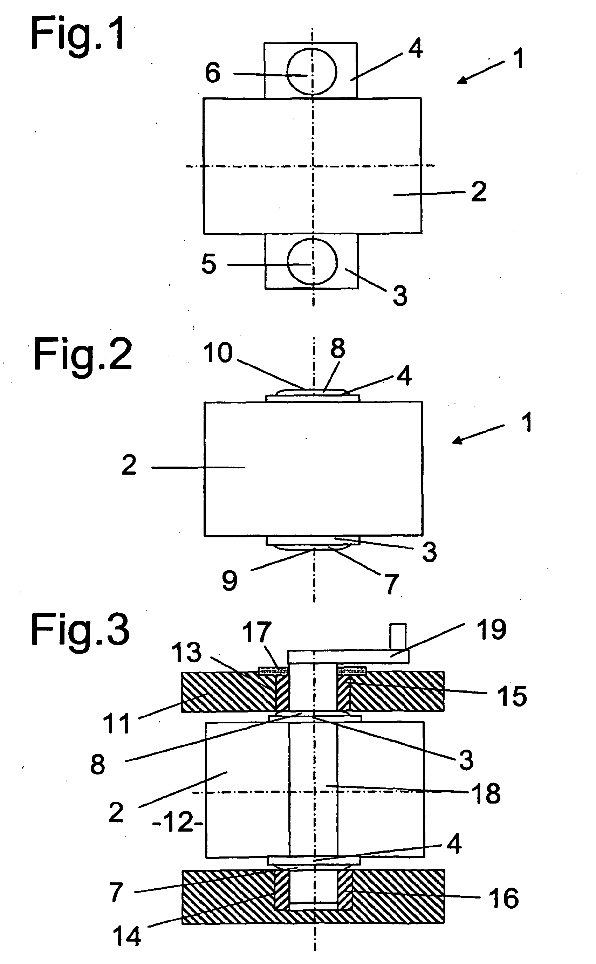

Die in der Figur 1 dargestellte Klappe 1 besteht aus einem Klappenkörper 2, an dessen entgegengesetzten Seiten zwei Fortsätze 3, 4 ausgebildet sind. Die gesamte Klappe 1 mit dem Klappenkörper 2 und den Fortsätzen 3, 4 wurden zuvor in einem Verfahrensschritt aus einer Blechplatte ausgestanzt. Der im vorliegenden Ausführungsbeispiel rechteckig geformte Klappenkörper 2 könnte selbstverständlich zum Verschließen eines runden Kanals ebenfalls eine Runde oder elliptische Form aufweisen, wobei dennoch an entgegengesetzten Seiten des Klappenkörpers 2 die Fortsätze 3, 4 erfindungsgemäß ausgebildet werden müssten.

An den Fortsätzen 3, 4 wurden im gleichen Verfahrensschritt Löcher 5, 6 an den Fortsätzen 3, 4 ausgestanzt.

In einem zweiten oder im ersten Verfahrensschritt integrierten Verfahrensschritt werden die Fortsätze 3, 4 zum Klappenkörper 2 um mindestens 70°, maximal 100°, im vorliegenden Ausführungsbeispiel 90°, gebogen, so dass die durch die Fortsätze 3, 4 aufgespannten Ebenen jeweils etwa senkrecht zur Ebene des Klappenkörpers 2 angeordnet sind. Anschließend werden kalotten- oder kugelförmige Ausprägungen durch Umformen der Fortsätze 3, 4 ausgeformt. Dieser Verfahrensschritt kann auch vor dem Biegen der Fortsätze 3, 4 zum Klappenkörper 2 erfolgen. Die durch die Ausprägungen 7, 8 entstehenden Erhebungen 9, 10 weisen jeweils vom Klappenkörper ausgesehen nach außen. Das Ergebnis nach Durchführung dieses Verfahrensschrittes zeigt Figur 2.

In einem weiteren Verfahrensschritt wird die Klappe 1 in ein Gehäuse 11 eingelegt, in dem ein Kanal 12 ausgebildet ist, der durch den Klappenkörper 2 beherrscht wird. Dieses Gehäuse 11 weist in der dargestellten beispielhaften Ausführung gemäß Figur 3 ein Durchgangsloch 13 sowie am zum Kanal 12 entgegengesetzten Ende des Gehäuses 11 ein Sackloch 14 auf. In dem Durchgangsloch 13 ist eine erste Lagerbuchse 15, im Sackloch 14 eine zweite Lagerbuchse 16 angeordnet. Die im Durchgangsloch 13 angeordnete erste Lagerbuchse 15 wird von außen durch ein Deckelelement 17 gesichert. Auch eine Sicherung durch Crimpen oder Einpressen der Buchse 15 wäre denkbar. In diesem Zustand liegt die Klappe 1 mit den Erhebungen 9, 10 gegen die Buchsen 15, 16 an. Bei einem Biegen der Fortsätze um einen Winkel kleiner 90° entsteht in dieser Stellung eine federnde Wirkung der Fortsätze 3, 4 gegen die Buchsen 15, 16, so dass durch die entstehende Federkraft der Fortsätze 3, 4 der Klappenkörper 2 an dieser Position im Gehäuse 11 gehalten wird.

Anschließend wird eine Welle 18 vom Durchgangsloch 13 aus durch die Löcher 5, 6 in den Fortsätzen 3, 4 bis in das Sackloch 14 eingeschoben und an den kalottenförmigen Ausprägungen 7, 8 bzw. den Fortsätzen 3, 4 verschweißt. Zusätzlich kann, falls gewünscht, am Ende der Welle 18 ein Hebel 19 angeordnet werden.

Durch diesen letzten Verfahrensschritt wird die erfindungsgemäße Klappenvorrichtung fertig gestellt, wie es in Figur 3 dargestellt ist.

Es wird deutlich, dass es auch möglich wäre, eine derartige Ausführung beispielsweise ohne die Ausprägungen aufzubauen, wobei jedoch durch die Ausprägungen die Gleiteigenschaften deutlich verbessert werden, da die entstehende Reibung und somit ein Schleifen zwischen Gehäuse und Klappe deutlich reduziert bzw. verhindert wird und somit kein Material abgetragen wird.

Selbstverständlich lässt sich eine derartige Klappenvorrichtung auch herstellen ohne die Klappe zuvor ins Gehäuse einzulegen, da die Stellung der Welle durch die beiden Löcher 5, 6 in den Fortsätzen 3, 4 festgelegt ist. Denkbar wäre selbstverständlich auch, derartige Löcher 5, 6 nicht auszuformen, sondern mit zwei Wellenstümpfen zu arbeiten, welche zunächst in das Gehäuse eingelegt werden, woraufhin dann der Klappenkörper in das Gehäuse eingelegt und mit den Wellenstümpfen verschweißt würde.

Es wird somit ein Verfahren bereitgestellt, durch dass eine äußerst kostengünstig herzustellende Klappenvorrichtung geschaffen wird, welche einfach zu montieren ist und ohne zusätzlichen Aufwand oder weitere Bearbeitungsschritte auch eine axiale Sicherung der Klappe im Gehäuse beinhaltet. Die Fortsätze dienen dabei als federnder Anschlag an den Buchsen, welche durch die Ausprägungen an den Fortsätzen nur gering durch Reibung belastet werden.

## Patentansprüche

1. Verfahren zur Herstellung einer Klappenvorrichtung für eine Verbrennungskraftmaschine mit folgenden Schritten:
a) Stanzen einer Klappe (1) aus einem Blech mit an entgegengesetzten Seiten eines Klappenkörpers (2) angeordneten Fortsätzen (3, 4);
b) Biegen der Fortsätze (3, 4) um mindestens 70° und maximal 100° zum Klappenkörper (2);
c) Verbinden der Fortsätze (3, 4) mit einer Welle (18), vorzugsweise mittels Schweißen,
**dadurch gekennzeichnet, dass**
vor oder nach Schritt b) eine kalotten- oder kugelförmige Ausprägung (7, 8) an den Fortsätzen (3, 4) ausgeformt wird, deren Erhebung (9, 10) vor Schritt c) vom Klappenkörper (2) weg weist und über die der Klappenkörper (2) gegen Buchsen (15, 16) im eingebauten Zustand anliegt.

2. Verfahren zur Herstellung einer Klappenvorrichtung nach Anspruch 1, **dadurch gekennzeichnet, dass** die Welle (18) aus zwei Wellenstümpfen besteht, von denen jeder mit einem der beiden Fortsätze (3, 4) verbunden wird.

3. Verfahren zur Herstellung einer Klappenvorrichtung nach Anspruch 1, **dadurch gekennzeichnet, dass** beim Stanzen gemäß Schritt a) in die Fortsätze (3, 4) jeweils ein Loch (5, 6) eingestanzt wird, wobei vor Schritt c) eine Welle (18) von einer Seite des Klappenkörpers (2) durch beide Löcher (5, 6) in den Fortsätzen (3, 4) geschoben wird.

4. Verfahren zur Herstellung einer Klappenvorrichtung nach einem der vorhergehenden Ansprüche, **dadurch gekennzeichnet, dass** der Klappenkörper (2) mit den Fortsätzen (3, 4) vor Schritt c) in ein Gehäuse (11) eingelegt wird, in dem ein Kanal (12) ausgebildet ist.

5. Klappenvorrichtung für eine Verbrennungskraftmaschine mit einem Klappenkörper aus Blech, wobei der Klappenkörper (2) an entgegengesetzten Enden Fortsätze (3, 4) aus Blech aufweist, welche zum Klappenkörper (2) in einem Winkel von 70° bis 100° abgewinkelt angeordnet sind, über welche der Klappenkörper (2) mit einer Welle (18) verbunden ist, **dadurch gekennzeichnet, dass** die Fortsätze (3, 4) kalotten- oder kugelförmige Ausprägungen (7, 8) aufweisen, deren Erhebungen (9, 10) in Richtung der Enden der Welle (18) weisen und mit denen der Klappenkörper (2) gegen Buchsen (15, 16) im eingebauten Zustand anliegt.

## Claims

1. A method for manufacturing a valve device for an internal combustion engine comprising the following steps:
a) punching a valve (1) from a metal sheet with protrusions (3, 4) provided on opposite sides of a valve body (2);
b) bending the protrusions (3, 4) by at least 70° and at most 100° with respect to the valve body (2);
c) connecting the protrusions (3, 4) with a shaft (18), preferably by welding,
**characterized in that**
prior to or after step b), a calotte-shaped or spherical stamping (7, 8) is formed at the protrusions (3, 4), whose raised portion (9, 10) faces away from the valve body (2) prior to step (c) and by which the valve body (2) abuts against bushings (15, 16) in the assembled state.

2. The method for manufacturing a valve device of claim 1, **characterized in that** the shaft (18) is formed by two shaft stubs each of which is connected with one of the two protrusions (3, 4).

3. The method for manufacturing a valve device of claim 1, **characterized in that**, when stamping according to step a), a respective hole (5, 6) is stamped into the protrusions (3, 4), wherein, prior to step c), a shaft (18) is inserted through both holes (5, 6) in the protrusions (3, 4) from one side of the valve body (2).

4. The method of manufacturing a valve device of one of the preceding claims, **characterized in that**, prior to step c), the valve body (2) is placed into a housing (10) with its protrusions (3, 4), in which housing a channel is formed (12).

5. A valve device for an internal combustion engine comprising a valve body of sheet metal, the valve body (2) comprising protrusions (3, 4) of sheet metal on opposite ends thereof which are angled under an angle of 70° to 100° with respect to the valve body (2) and by which the valve body (2) is connected with a shaft (18), **characterized in that** the protrusions (3, 4) are formed with calotte-shaped or spherical stampings (7, 8) whose raised portions (9, 10) are directed towards the ends of the shaft (18) and by which the valve body (2) abuts against bushings (15, 16) in the assembled state.

## Revendications

1. Procédé de fabrication d'un dispositif à clapets pour un moteur à combustion interne comprenant les étapes suivantes:
a) estamper un clapet (1) d'un tôle avec des saillies (3, 4) disposées à des côtés opposés d'un corps de clapet (2);
b) cintrer les saillies (3, 4) par au moins 70° et au maximum 100° par rapport au corps de clapet (2);
c) joindre les saillies (3, 4) à un arbre (18), de préférence par soudage,
**caractérisé en ce que**
avant ou après l'étape b), une marque (7, 8) en forme d'une calotte ou d'une sphère est formée dans les saillies (3, 4) dont, avant l'étape c), la bosse (9, 10) est détournée du corps de clapet (2) et par laquelle ledit corps de clapet (2) reste sur des douilles (15, 16) après montage.

2. Procédé de fabrication d'un dispositif à clapets selon la revendication 1, **caractérisé en ce que** l'arbre (18) est formé par deux bouts d'arbre dont chacun est raccordé avec une des deux saillies (3,4).

3. Procédé de fabrication d'un dispositif à clapets selon la revendication 1, **caractérisé en ce qu'**au cours de l'estampage selon l'étape a), un trou (5, 6) est estampé respectivement dans les saillies (3, 4), un arbre (18) étant poussé d'un côté du corps de clapet (2) à travers les deux trous (5, 6) dans lesdites saillies (3, 4).

4. Procédé de fabrication d'un dispositif à clapets selon l'une quelconque des revendications précédentes, **caractérisé en ce que** le corps de clapet (2) est placé dans un boîtier (11) avec ses saillies (3, 4), un passage (12) étant formé dans ledit boîtier.

5. Dispositif à clapets pour un moteur à combustion interne, comprenant un corps de clapet en tôle, ledit corps de clapet (2) présentant des saillies (3, 4) en tôle à des cotés opposés, lesdites saillies étant coudées par rapport au corps de clapet (2) sous un angle de 70° à 100°, ledit corps de clapet (2) étant raccordé avec un arbre (18) par lesdites saillies, **caractérisé en ce que** les saillies (3, 4) comprennent des marques en forme d'une calotte ou d'une sphère (7, 8) dont les bosses (9, 10) sont tournées vers les ex-trémité de l'arbre (18) et par lesquelles ledit corps de clapet (2) reste sur des douilles (15, 16) après montage.
